# FASCICULE DE BREVET EUROPEEN

(11) **EP 3 842 692 B1**
(45) Date de publication et mention de la délivrance du brevet: **03.06.2026**
(21) Numéro de dépôt: 20216279.8
(22) Date de dépôt: 22.12.2020
(51) Int. Cl.: F21S 43/20, F21S 43/14, F21S 45/10, F21S 43/15, F21S 43/19

(54) **DISPOSITIF LUMINEUX POUR VÉHICULE**
LEUCHTVORRICHTUNG FÜR FAHRZEUG
LIGHT DEVICE FOR A VEHICLE

(30) Priorité: 23.12.2019 FR 1915484
(43) Date de publication de la demande: 30.06.2021
(73) Titulaire: Flex-N-Gate France, 25405 Audincourt (FR)
(72) Inventeur: DEMONTOUX, Stéphane David, 25400 AUDINCOURT (FR); DUQUESNOY, David Pierre Gilles, 70400 CHALONVILLARS (FR); RECEVEUR, Thierry, 25310 VILLARS LES BLAMONT (FR)
(74) Mandataire: Lavoix

(56) Documents cités:
- WO-A1-2018/186450
- DE-A1- 102017 120 532
- DE-U1- 202017 103 381
- US-A- 4 733 335
- US-A1- 2015 022 994
- US-A1- 2015 029 718

## Description

La présente invention concerne selon un premier aspect un dispositif lumineux pour véhicule du type comprenant un élément translucide définissant une surface externe et une surface interne, un masque définissant une surface externe et une surface interne, le masque délimitant une pluralité d'ouvertures traversantes, une source lumineuse comprenant au moins un circuit électronique comportant une pluralité de diodes électroluminescentes.

Le dispositif lumineux est par exemple un dispositif lumineux et/ou un dispositif de signalisation.

Plus particulièrement, le véhicule est un véhicule automobile.

L'invention concerne également selon un deuxième aspect un procédé de fabrication d'un tel dispositif lumineux.

Ce type de dispositif lumineux est par exemple un feu de circulation diurne, encore appelé feu de jour, fixé à l'avant du véhicule. Ce dispositif permet au conducteur du véhicule d'être mieux vu par les autres usagers de la route durant la journée dans des conditions normales de circulation.

En variante, le dispositif lumineux est un feu de position permettant au conducteur du véhicule de signaler sa présence aux autres usagers de la route la nuit ou lorsque les conditions de visibilité sont mauvaises (pluie, brouillard, chaussée faiblement éclairée, etc.).

En variante encore, le dispositif lumineux est un feu clignotant permettant au conducteur du véhicule d'indiquer son intention de changer de direction aux autres usagers de la route.

Le dispositif lumineux selon l'invention peut également présenter plusieurs des fonctions mentionnées ci-dessus.

DE 10 2012 003 200 A1, US 2015/022994 A1 et DE 10 2017 120532 A1 décrivent des exemples de ce type de dispositif lumineux.

Le masque est fixé sur une surface extérieure de l'élément translucide.

Ceci pose de nombreux inconvénients notamment en termes de tenue au cours du temps. Le masque est beaucoup trop sensible à l'environnement comme par exemple aux chocs, aux intempéries, au rayonnement ultraviolet ou à la pollution. Ces éléments vont progressivement dégrader le masque et notamment son aspect de surface. Ainsi, ce type de dispositif nécessite d'ajouter un revêtement supplémentaire pour protéger le masque. Ceci complique le procédé de fabrication du dispositif et entraîne des coûts supplémentaires.

Un objectif de l'invention est de proposer un dispositif lumineux formant un motif lumineux quelconque contrasté et homogène, et qui présente une bonne tenue dans le temps et plus particulièrement une bonne résistance aux chocs, aux rayures et aux intempéries.

A cet effet, l'invention porte sur un dispositif lumineux selon la revendication 1.

Ainsi, comme le masque est fixé sur la surface interne de l'élément translucide, il est protégé des rayures, des chocs et de toutes détériorations qui viendraient altérer l'aspect esthétique du motif lumineux du dispositif lumineux.

Le masque conserve ainsi un bon aspect de surface au cours du temps. Ainsi, le contraste entre les régions de l'élément translucide non recouvertes par le masque et les régions de l'élément translucide recouvertes par le masque est élevé et procure un aspect mélioratif au dispositif lumineux.

La pluralité de diodes électroluminescentes favorise également un contraste élevé puisque les régions de l'élément translucide non recouvertes par le masque et qui forment le motif présentent une luminosité sensiblement identique.

D'autres caractéristiques du dispositif lumineux sont définies dans les revendications 2 à 5.

L'invention concerne également selon un deuxième aspect un procédé de fabrication d'un dispositif lumineux pour véhicule selon la revendication 6.

Une autre caractéristique du procédé de fabrication d'un dispositif lumineux pour véhicule est définie dans la revendication 7.

D'autres aspects et avantages de l'invention apparaitront à la lecture de la description qui suit, donnée à titre d'exemple et non limitatif, et faite en référence aux dessins annexés parmi lesquels :
- [Fig 1] la figure 1 est une vue schématique éclatée d'un dispositif lumineux selon l'invention,
- [Fig 2] [Fig3] les figures 2 et 3 sont des vues schématiques en coupe de l'élément translucide du dispositif de la figure 1 lors de deux étapes de la fabrication du dispositif.

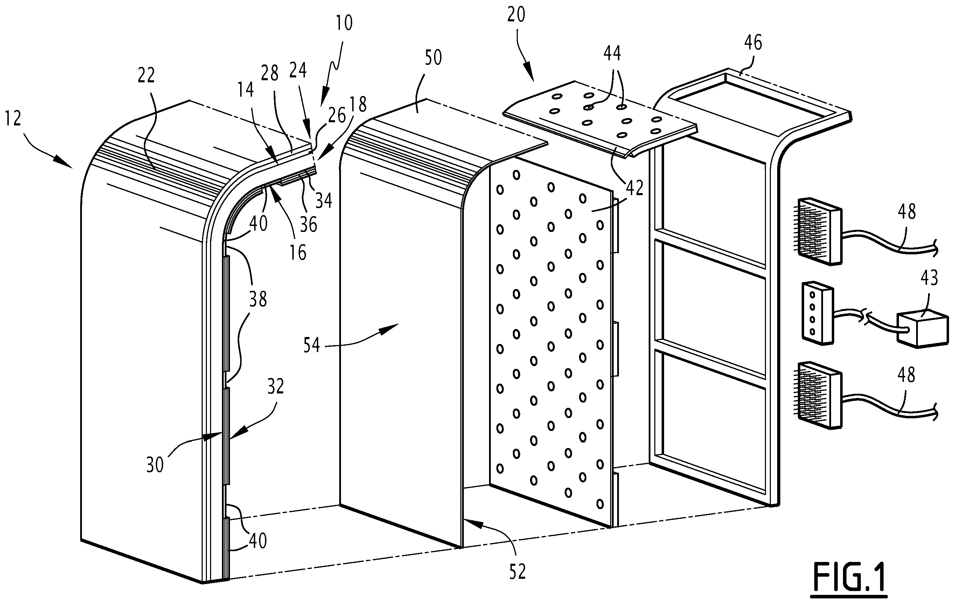

La figure 1 présente une vue schématique éclatée d'une dispositif lumineux 10 pour véhicule selon l'invention.

Dans la description qui suit, les termes « interne » et « externe » s'entendent relativement au véhicule sur lequel est fixé le dispositif lumineux 10. Le terme « externe » s'entend comme relativement plus éloigné du véhicule et qualifie ce qui est tourné vers l'extérieur du dispositif lumineux 10. Le terme « interne » s'entend comme relativement plus proche du véhicule et qualifie ce qui est tourné vers l'intérieur du dispositif lumineux 10.

Le terme « translucide » se dit d'un corps transmettant la lumière, c'est-à-dire présentant un taux de transmission de la lumière compris entre 5% et 100%.

Le terme « transparent » se dit d'un corps transmettant la lumière par réfraction et au travers duquel les objets sont visibles avec netteté, c'est-à-dire un corps présentant un taux de transmission de lumière supérieur à 90%, par exemple proche de ou égal à 100%.

Le terme « opaque » désigne un corps qui laisse peu ou pas du tout passer la lumière, c'est-à-dire un objet présentant un taux de transmission de la lumière inférieur à 5%, voire proche de ou égal à 0 %.

La lumière est considérée dans le domaine visible, c'est-à-dire composée d'ondes électromagnétiques dont la longueur d'onde est comprise généralement entre 380 nm et 780 nm.

Le dispositif lumineux 10 est par exemple un dispositif d'éclairage et/ou de signalisation.

Le véhicule est par exemple un véhicule automobile, comme une voiture, un camion, un bus ou autre.

Le dispositif lumineux 10 comprend un élément translucide 12 définissant une surface externe 14 et une surface interne 16, un masque 18 fixé sur la surface interne 16 de l'élément translucide 12, et une source lumineuse 20 disposée en regard du masque 18.

L'élément translucide 12 est également appelé « feu de glace ».

La surface externe 14 de l'élément translucide 12 est destinée à exposée avec l'environnement extérieur du véhicule.

La surface externe 14 et la surface interne 16 de l'élément translucide 12 sont sensiblement parallèles entre elles localement. Dit autrement, l'épaisseur de l'élément translucide 12 est sensiblement constante.

L'épaisseur de l'élément translucide 12 est par exemple comprise entre 2 mm et 5 mm.

Avantageusement, l'épaisseur de l'élément translucide 12 est comprise entre 2 mm et 3 mm, par exemple 2 mm.

Ceci permet de limiter la déformation optique du motif lumineux créé par le masque 18 au travers de l'élément translucide 12.

Dans l'exemple de la figure 1, les surfaces externe 14 et interne 16 comprennent au moins une région incurvée 22, par exemple convexe orientée vers l'extérieur du dispositif lumineux 10.

L'élément translucide 12 est de préférence réalisé en matériau plastique.

Avantageusement, l'élément translucide 12 est réalisé en polycarbonate.

Ceci permet d'obtenir un élément translucide présentant un taux de transmission élevé, supérieur à 90%, c'est-à-dire un élément transparent 12.

Utiliser un élément transparent 12 permet d'obtenir un dispositif lumineux 10 avec une intensité lumineuse puissante tout en limitant la consommation électrique.

De plus, le polycarbonate présente une très bonne tenue mécanique, de bonnes propriétés d'étanchéité, et d'aspect.

Avantageusement, le dispositif lumineux 10 comprend au moins une couche de revêtement de protection 24 fixée sur la surface externe 14 de l'élément translucide 12.

La couche de revêtement de protection 24 permet de protéger la surface externe 14 de l'élément translucide 12 contre les rayures, l'abrasion, les chocs, les rayons ultra-violets, les produits chimiques présents dans l'air environnant, le jaunissement, les intempéries, etc.

La couche de revêtement de protection 24 présente par exemple une épaisseur comprise entre 5 µm et 30 µm, par exemple 10 µm.

Par exemple, la couche de revêtement de protection 24 comprend une couche d'apprêt 26 fixée sur la surface externe 14 de l'élément translucide 12 et une couche de vernis 28 fixée sur la couche d'apprêt 26.

La couche d'apprêt 26 permet une meilleure fixation de la couche de vernis 28.

De préférence, la couche de vernis 28 comprend une résine de siloxane modifiée.

Le masque 18 comprend une surface externe 30 fixée sur la surface interne 16 de l'élément translucide 12, et une surface interne 32.

De préférence, le masque 18 comprend au moins une couche de peinture 34, 36 appliquée sur la surface interne 16 de l'élément translucide 12.

Avantageusement, comme visible sur les figures 1 à 3, le masque 18 comprend une première couche de peinture 34 colorée appliquée sur la surface interne 16 de l'élément translucide 12 et une deuxième couche de peinture 36 opacifiante appliquée sur la première couche de peinture 34 colorée.

La première couche de peinture 34 présente une épaisseur comprise entre 5 µm et 30 µm, par exemple 12 µm.

La deuxième couche de peinture 36 présente une épaisseur comprise entre 5 µm et 40 µm, par exemple 20 µm.

Ainsi, le masque 18 présente une épaisseur comprise entre 10 µm et 70 µm, par exemple 30 µm.

La couleur de la première couche de peinture 34 correspond par exemple sensiblement à la couleur de la carrosserie du véhicule ou d'un élément de la carrosserie du véhicule par exemple adjacents au dispositif lumineux 10 tel qu'un pare-chocs ou qu'un rétroviseur.

Elle correspond à la couleur du masque 18 tel que visible par l'utilisateur observant le dispositif lumineux 10 depuis l'extérieur du véhicule et plus généralement à la couleur du dispositif lumineux 10 vu de l'extérieur du véhicule lorsque la source lumineuse 20 est éteinte.

Ainsi, on obtient un ensemble comprenant un élément de carrosserie de véhicule et un dispositif lumineux 10 dans lequel l'élément de carrosserie et la première couche de peinture 34 présentent la même couleur.

La première couche de peinture 34 comprend par exemple une pigmentation ou un composé donnant un effet métallique ou nacré.

La deuxième couche de peinture 36 opacifiante permet de s'assurer que la région de la surface interne 16 de l'élément translucide recouverte par le masque 18 est opaque et qu'il n'y a aucune fuite de lumière.

Ceci permet d'améliorer encore le contraste entre les régions de la surface interne 16 de l'élément translucide 12 recouvertes par le masque 18 à travers lesquelles il n'y a aucune transmission de lumière, et les régions de la surface interne 16 de l'élément translucide 12 qui ne sont pas recouvertes par le masque 18 à travers lesquelles la lumière de la source de lumière 20 est transmise au travers de l'élément translucide 12.

De plus, la deuxième couche de peinture 36 opacifiante permet de protéger la première couche de peinture 34 car elle est résistante à l'environnement et ainsi contribue à obtenir un masquage de qualité qui présente une bonne tenue au cours du temps.

Le masque 18 délimite une pluralité d'ouvertures traversantes 38. Les ouvertures traversantes 38 sont des régions de la surface interne 16 de l'élément translucide 12 qui ne sont pas recouvertes par le masque 18 et où la lumière de la source lumineuse 20 traverse l'élément translucide 12.

La pluralité d'ouvertures traversantes 38 forme par exemple un motif géométrique et/ou un symbole et/ou un texte et/ou un dessin comme un logo de marque.

Avantageusement, le dispositif lumineux 10 comprend une couche de revêtement antibuée 40 appliquée sur la couche de peinture la plus interne, c'est-à-dire sur la deuxième couche de peinture 36 dans le mode de réalisation de la figure 1 et à l'intérieur des ouvertures traversantes 38 sur la surface interne 16 de l'élément translucide 12 sur les régions de la surface interne 16 non recouvertes par le masque 18.

La couche de revêtement antibuée 40 empêche la formation de condensation d'eau sous forme de gouttelettes sur la surface interne 32 du masque 18 et au niveau des ouvertures traversantes 38 sur la surface interne 16 de l'élément translucide 12.

La source lumineuse 20 comprend au moins un circuit électronique 42 comportant une pluralité de diodes électroluminescentes 44.

Dans l'exemple de la figure 1, la source lumineuse 20 comprend deux circuits électroniques 42 disposés de part et d'autre de la courbure 22 de l'élément translucide 12.

Par exemple, chaque circuit électronique 42 comprend entre 10 et 100 diodes électroluminescentes 44.

Les diodes électroluminescentes 44 sont par exemple réparties de manière régulière sur le circuit électronique 42 et à une distance suffisante de façon à couvrir d'une lumière homogène les ouvertures traversantes 38 du masque 18.

Les diodes électroluminescentes 44 sont disposées en regard de la surface interne 32 du masque 18.

Par exemple, chacune des diodes électroluminescentes 44 est disposée en regard d'une ouverture traversante 38 du masque 18.

Par exemple, toutes les diodes électroluminescentes 44 sont de même nature et émettent une lumière présentant les mêmes caractéristiques (intensité et longueur d'onde par exemple).

En variante, les diodes électroluminescentes 44 émettent des lumières distinctes (intensité et/ou longueur d'onde par exemple).

De préférence, le dispositif lumineux 10 comprend un châssis 46 sur lequel sont fixés les circuits électroniques 42, et au moins un dispositif d'alimentation 48 connecté aux circuits électroniques 42 pour alimenter en énergie les circuits électroniques 42.

Avantageusement, le dispositif lumineux 10 comprend un module de contrôle 43 des diodes électroluminescentes 44 connecté au circuit électronique 42.

Le module de contrôle 43 des diodes électroluminescentes permet de contrôler l'allumage de chacune des diodes électroluminescentes 44 indépendamment les unes des autres, par exemple pendant une durée prédéterminée.

En variante ou en complément, le module de contrôle 43 permet de contrôler l'allumage des diodes électroluminescentes 44 par groupes de diodes 44.

En variante ou en complément, le module de contrôle 43 permet de contrôler l'allumage de l'ensemble des diodes électroluminescentes 44.

Ainsi, les diodes électroluminescentes 44 sont par exemple allumées successivement selon un ordre particulier, par exemple selon une direction particulière, pour former une animation lumineuse.

L'animation lumineuse correspond à l'allumage d'au moins une diode électroluminescente 44 pendant que d'autres diodes électroluminescentes 44 sont éteintes, puis à l'allumage d'autres diodes électroluminescentes 44 pendant que la ou les diodes électroluminescentes 44 allumées sont encore allumées ou éteintes, puis à l'extinction de diodes électroluminescentes 44 pendant que d'autres diodes électroluminescentes 44 sont allumées.

Ceci permet de créer un mouvement de propagation de la lumière d'une zone à une autre de la surface externe 14 de l'élément translucide 12.

Avantageusement, le dispositif lumineux 10 comprend au moins un dispositif d'homogénéisation lumineuse 50 disposé entre le masque 18 et la source de lumière 20.

Le dispositif d'homogénéisation lumineuse 50 comprend une surface interne 52 orientée vers la source lumineuse 20 et une surface externe 54 orientée vers le masque 18.

Le dispositif d'homogénéisation lumineuse 50 modifie la trajectoire des rayons lumineux incidents. Les rayons lumineux incidents issus de la source lumineuse 20 arrivent au niveau de la surface interne 52 du dispositif d'homogénéisation lumineuse 50 selon une pluralité d'angles d'incidence.

Le dispositif d'homogénéisation lumineuse 50 modifie la direction des rayons lumineux de sorte que les rayons émergents présentent tous des directions de propagation sensiblement parallèles entre elles.

De préférence, les rayons émergents présentent une direction de propagation sensiblement perpendiculaire à la surface interne 16 de l'élément translucide 12.

Le dispositif d'homogénéisation lumineuse 50 permet d'obtenir un faisceau de lumière homogène au travers de l'élément translucide 12. Ainsi, l'intensité lumineuse des régions de l'élément translucide 12 qui ne sont pas recouvertes par le masque 18 est sensiblement la même.

Le dispositif d'homogénéisation lumineuse 50 comprend par exemple un premier film lenticulaire interne et un deuxième film lenticulaire externe disposé en regard du premier film lenticulaire.

Le premier film lenticulaire est configuré pour modifier la direction des rayons lumineux incidents selon une direction sensiblement parallèle à la surface interne 16 de l'élément translucide 12.

Le deuxième film lenticulaire est configuré pour modifier la direction des rayons lumineux en sortie du premier film lenticulaire selon une direction sensiblement perpendiculaire à la surface interne 16 de l'élément translucide 12.

Avantageusement, en variante, le dispositif d'homogénéisation lumineuse 50 comprend un unique film lenticulaire configuré pour modifier la direction des rayons lumineux incident sur sa surface interne, et configuré pour modifier les rayons lumineux dans une autre direction sur sa surface externe.

Un tel film lenticulaire est par exemple décrit dans la demande de brevet EP 3 298 455 A1.

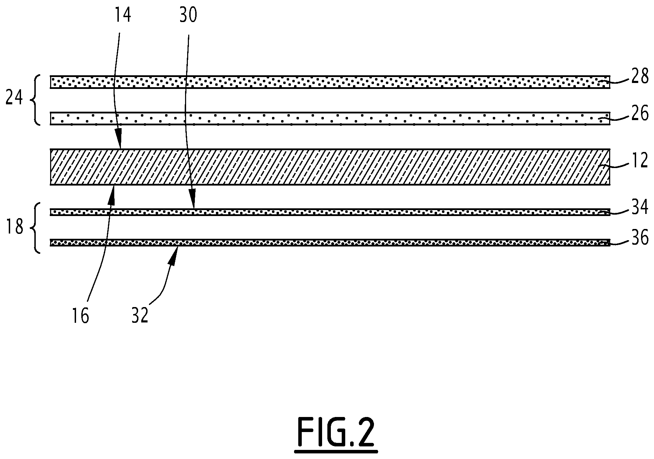

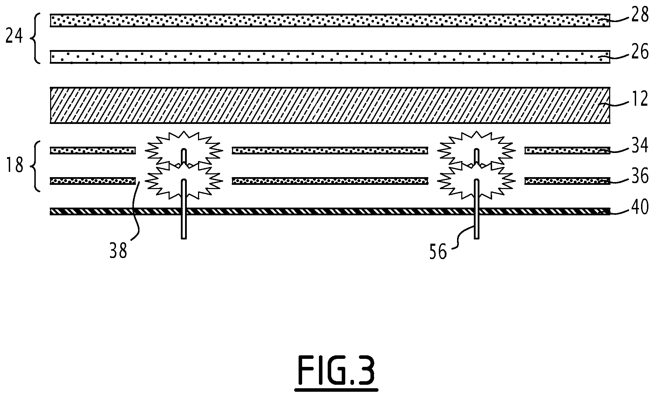

Un procédé de fabrication d'un dispositif lumineux 10 tel que décrit ci-dessus va maintenant être décrit en référence aux figures 2 et 3.

Le procédé comprend tout d'abord la fourniture de l'élément translucide 12.

L'élément translucide 12 est par exemple fabriqué par injection dans un moule.

De préférence, l'élément translucide 12 est fabriqué par injection de polycarbonate pour obtenir un élément transparent.

Le procédé comprend ensuite l'application du masque 18 sur la surface interne 16 de l'élément translucide 12.

Par exemple, l'étape d'application du masque 18 comprend l'application d'au moins une couche de peinture 34, 36 sur la surface interne 16 de l'élément translucide 12.

Plus particulièrement, dans l'exemple des figures 1 à 3, le procédé comprend l'application d'une première couche de peinture 34 colorée sur la surface interne 16 de l'élément translucide 12.

Le procédé comprend ensuite l'application d'une deuxième couche de peinture 36 opacifiante sur la première couche de peinture 34.

L'étape de définition du masque 18 est avantageusement réalisée en utilisant un rayonnement laser 56 (figure 3).

Le rayonnement laser 56 permet de décaper une partie de la première couche de peinture 34 et de la deuxième couche de peinture 36 présentes sur la surface interne 16 de l'élément translucide 12 et ainsi de définir au moins une ouverture traversante 38 dans le masque 18.

Par exemple, l'ouverture traversante 38 présente une dimension minimale de 0,2 mm sur la surface interne 16 de l'élément translucide 12.

Le rayonnement laser 56 permet de définir un masque 18 présentant un motif géométrique précis comportant par exemple des régions incurvées.

De préférence, avant l'application du masque 18, la surface externe 14 de l'élément translucide 12 est recouverte par au moins une couche de revêtement de protection 24.

Par exemple, la surface externe 14 de l'élément translucide 12 est recouverte par une couche d'apprêt 26 par vaporisation, puis d'une couche de vernis 28 par vaporisation.

L'élément translucide 12 recouvert avec la couche d'apprêt 26 et la couche de vernis 28 est ensuite par exemple traiter thermiquement pour durcir la couche de vernis 28 et améliorer l'adhésion des couches 26, 28 sur la surface externe 14 de l'élément translucide 12.

Avantageusement, le procédé comprend l'application d'une couche de revêtement antibuée 40 sur les régions de la surface interne 16 de l'élément translucide 12 non recouvertes par le masque 18. La couche de revêtement antibuée peut également recouvrir toute ou partie de la deuxième couche de peinture 36.

Le dispositif lumineux 10 est ensuite assemblé tel que présenté sur la figure 1.

L'élément translucide 12 est disposé en regard de la source lumineuse 20.

Plus particulièrement, les circuits électroniques 42 sont fixés sur le châssis 46 et l'élément translucide 12 comprenant le masque 18 est disposé en regard des circuits électroniques 42.

De préférence, un dispositif d'homogénéisation lumineuse 50 est disposé entre la source lumineuse 20 et l'élément translucide 12.

L'ensemble est par exemple fixé dans un boîtier (non représenté).

Le dispositif lumineux 10 est ensuite fixé sur le véhicule.

Avantageusement, le procédé comprend l'application d'une couche de revêtement antibuée 40 sur les régions de la surface interne 16 de l'élément translucide 12 non recouvertes par le masque 18. La couche de revêtement antibuée peut également recouvrir toute ou partie de la deuxième couche de peinture 36.

Le dispositif lumineux 10 est ensuite assemblé tel que présenté sur la figure 1.

L'élément translucide 12 est disposé en regard de la source lumineuse 20.

Plus particulièrement, les circuits électroniques 42 sont fixés sur le châssis 46 et l'élément translucide 12 comprenant le masque 18 est disposé en regard des circuits électroniques 42.

De préférence, un dispositif d'homogénéisation lumineuse 50 est disposé entre la source lumineuse 20 et l'élément translucide 12.

L'ensemble est par exemple fixé dans un boîtier (non représenté).

Le dispositif lumineux 10 est ensuite fixé sur le véhicule.

## Revendications

1. Dispositif lumineux (10) pour véhicule, le dispositif lumineux (10) comprenant :
- un élément translucide (12) définissant une surface externe (14) et une surface interne (16),
- un masque (18) définissant une surface externe (30) et une surface interne (32), le masque (18) délimitant une pluralité d'ouvertures traversantes (38),
- une source lumineuse (20) comprenant au moins un circuit électronique (42) comportant une pluralité de diodes électroluminescentes (44),
la surface externe (30) du masque (18) étant fixée sur la surface interne (16) de l'élément translucide (12), les diodes électroluminescentes (44) de la source lumineuse (20) étant disposées en regard de la surface interne (32) du masque (18),
**caractérisé en ce que** le masque (18) comprend en outre au moins une première couche de peinture (34) colorée appliquée sur la surface interne (16) de l'élément translucide (12) et une deuxième couche de peinture (36) opacifiante appliquée sur la première couche de peinture (34) colorée.

2. Dispositif lumineux (10) selon la revendication1, comprenant un module de contrôle (43) des diodes électroluminescentes (44) connecté au circuit électronique (42) et configuré pour contrôler l'allumage et l'extinction de chacune des diodes électroluminescentes (44) par groupe ou indépendamment les unes des autres.

3. Dispositif lumineux (10) selon la revendication 1 ou 2, dans lequel l'élément translucide (12) est en polycarbonate.

4. Dispositif lumineux (10) selon l'une quelconque des revendications 1 à 3, comprenant en outre au moins une couche de revêtement de protection (24) fixée sur la surface externe (14) de l'élément translucide (12).

5. Dispositif lumineux (10) selon l'une quelconque des revendications 1 à 4, comprenant en outre au moins un dispositif d'homogénéisation lumineuse (50) disposé entre la source lumineuse (20) et le masque (18).

6. Procédé de fabrication d'un dispositif lumineux (10) d'un véhicule, le procédé comprenant au moins les étapes suivantes :
- fournir un élément translucide (12), l'élément translucide (12) définissant une surface externe (14) et une surface interne (16),
- fournir une source lumineuse (20) comprenant au moins un circuit électronique (42) comportant une pluralité de diodes électroluminescentes (44),
- appliquer un masque (18) sur la surface interne (16) de l'élément translucide (12),
- définir au moins une ouverture traversante (38) dans le masque (18),
- placer les diodes électroluminescentes (44) en regard de la surface interne (32) du masque (18), **caractérisé en ce que** l'étape d'application du masque (18) comprend en outre l'application d'au moins une première couche de peinture (34) colorée appliquée sur la surface interne (16) de l'élément translucide (12) et d'une deuxième couche de peinture (36) opacifiante appliquée sur la première couche de peinture (34) colorée.

7. Procédé selon la revendication 6, dans lequel l'étape de définition de l'ouverture traversante (38) est réalisée en utilisant un rayonnement laser (56).

## Patentansprüche

1. Leuchtvorrichtung (10) für ein Fahrzeug, die Leuchtvorrichtung (10) umfassend:
- ein lichtdurchlässiges Element (12), das eine Außenfläche (14) und eine Innenfläche (16) definiert,
- eine Maske (18), die eine Außenfläche (30) und eine Innenfläche (32) definiert, wobei die Maske (18) eine Vielzahl von Durchgangsöffnungen (38) begrenzt,
- eine Lichtquelle (20), umfassend mindestens eine elektronische Schaltung (42), die eine Vielzahl von Leuchtdioden (44) aufweist,
wobei die Außenfläche (30) der Maske (18) an der Innenfläche (16) des lichtdurchlässigen Elements (12) befestigt ist, die Leuchtdioden (44) der Lichtquelle (20) gegenüber der Innenfläche (32) der Maske (18) angeordnet sind,
**dadurch gekennzeichnet, dass** die Maske (18) ferner mindestens eine erste farbige Farbschicht (34), die auf die Innenfläche (16) des lichtdurchlässigen Elements (12) aufgebracht ist, und eine zweite trübende Farbschicht (36) umfasst, die auf die erste farbige Farbschicht (34) aufgebracht ist.

2. Leuchtvorrichtung (10) nach Anspruch 1, umfassend ein Steuermodul (43) der Leuchtdioden (44), das mit der elektronischen Schaltung (42) verbunden und konfiguriert ist, um das Ein- und Ausschalten jeder der Leuchtdioden (44) gruppenweise oder unabhängig voneinander zu steuern.

3. Leuchtvorrichtung (10) nach Anspruch 1 oder 2, wobei das lichtdurchlässige Element (12) aus Polycarbonat ist.

4. Leuchtvorrichtung (10) nach einem der Ansprüche 1 bis 3, ferner umfassend mindestens eine Schutzbeschichtungsschicht (24), die an der Außenfläche (14) des lichtdurchlässigen Elements (12) befestigt ist.

5. Leuchtvorrichtung (10) nach einem der Ansprüche 1 bis 4, ferner umfassend mindestens eine Lichthomogenisierungsvorrichtung (50), die zwischen der Lichtquelle (20) und der Maske (18) angeordnet ist.

6. Herstellungsverfahren einer Leuchtvorrichtung (10) eines Fahrzeugs, das Verfahren umfassend mindestens die folgenden Schritte:
- Bereitstellen eines lichtdurchlässigen Elements (12), wobei das lichtdurchlässige Element (12) eine Außenfläche (14) und eine Innenfläche (16) definiert,
- Bereitstellen einer Lichtquelle (20), umfassend mindestens eine elektronische Schaltung (42), die eine Vielzahl von Leuchtdioden (44) aufweist,
- Aufbringen einer Maske (18) auf die Innenfläche (16) des lichtdurchlässigen Elements (12),
- Definieren mindestens einer Durchgangsöffnung (38) in der Maske (18),
- Anordnen der Leuchtdioden (44) gegenüber der Innenfläche (32) der Maske (18), **dadurch gekennzeichnet, dass** der Schritt eines Aufbringens der Maske (18) ferner ein Aufbringen von mindestens einer ersten farbigen Farbschicht (34), die auf die Innenfläche (16) des lichtdurchlässigen Elements (12) aufgebracht wird, und einer zweiten trübenden Farbschicht (36), die auf die erste farbige Farbschicht (34) aufgebracht wird, umfasst.

7. Verfahren nach Anspruch 6, wobei der Schritt eines Definierens der Durchgangsöffnung (38) unter Verwendung von Laserstrahlung (56) durchgeführt wird.

## Claims

1. A lighting device (10) for a vehicle, the lighting device (10) comprising:
- a translucent element (12) defining an external surface (14) and an internal surface (16),
- a mask (18) defining an external surface (30) and an internal surface (32), the mask (18) defining a plurality of through openings (38),
- a light source (20) comprising at least one electronic circuit (42) comprising a plurality of electroluminescent diodes (44),
the external surface (30) of the mask (18) being fixed on the internal surface (16) of the translucent element (12), the electroluminescent diodes (44) of the light source (20) being disposed facing the internal surface (32) of the mask (18),
**characterized in that** the mask (18) comprises at least a first layer of colored paint (34) applied to the internal surface (16) of the translucent element (12) and a second layer of opacifying paint (36) applied to the first layer of colored paint (34).

2. The lighting device (10) according to claim 1, comprising a control module (43) of the electroluminescent diodes (44) connected to the electronic circuit (42) and configured to control the switching on and off of each of the electroluminescent diodes (44) in groups or independently of each other.

3. The lighting device (10) according to any one of claims 1 or 2, wherein the translucent element (12) is made of polycarbonate.

4. The lighting device (10) according to any one of claims 1 to 3, further comprising at least one protective coating layer (24) fixed to the external surface (14) of the translucent element (12).

5. The lighting device (10) according to any one of claims 1 to 4, further comprising at least one light homogenization device (50) disposed between the light source (20) and the mask (18).

6. A method of manufacturing a lighting device (10) for a vehicle, the method comprising at least the following steps:
- providing a translucent element (12), the translucent element (12) defining an external surface (14) and an internal surface (16),
- providing a light source (20) comprising at least one electronic circuit (42) comprising a plurality of electroluminescent diodes (44),
- applying a mask (18) on the internal surface (16) of the translucent element (12),
- defining at least one through opening (38) in the mask (18)
- disposing the electroluminescent diodes (44) facing the internal surface (32) of the mask (18),
**characterized in that** the step of applying the mask (18) comprises applying at least a first layer of colored paint (34) applied to the internal surface (16) of the translucent element (12) and a second layer of opacifying paint (36) applied to the first layer of colored paint (34).

7. The method according to claim 6, wherein the step of defining the through opening (38) is performed using laser radiation (56).
